Europäisches Patentamt

European Patent Office

Office européen des brevets

(19)

(11) **EP 1 272 892 B1**

(12) **FASCICULE DE BREVET EUROPEEN**

(45) Date de publication et mention
de la délivrance du brevet:
**19.07.2006 Bulletin 2006/29**

(21) Numéro de dépôt: **01913995.5**

(22) Date de dépôt: **13.03.2001**

(51) Int Cl.:
**G02C 13/00** (2006.01)

(86) Numéro de dépôt international:
**PCT/FR2001/000743**

(87) Numéro de publication internationale:
**WO 2001/075511 (11.10.2001 Gazette 2001/41)**

(54) **PROCEDE DE MONTAGE DE LENTILLES OPHTALMIQUES**

VERFAHREN ZUM MONTIEREN VON OPHTHALMISCHEN LINSEN

METHOD FOR MOUNTING OPHTHALMIC LENSES

(84) Etats contractants désignés:
**AT BE CH CY DE DK ES FI FR GB GR IE IT LI LU
MC NL PT SE TR**

(30) Priorité: **31.03.2000 FR 0004143**

(43) Date de publication de la demande:
**08.01.2003 Bulletin 2003/02**

(73) Titulaire: **ESSILOR INTERNATIONAL
COMPAGNIE GENERALE D'OPTIQUE
94227 Charenton cédex (FR)**

(72) Inventeurs:
• **BAR, Nathalie
F-94220 Charenton-le-Pont (FR)**

• **DECRETON, Bruno
F-94220 Charenton-le-Pont (FR)**
• **BONNIN, Thierry
F-91330 Yerres (FR)**
• **DONETTI, Bérangère
F-94500 Champigny-sur-Marne (FR)**
• **LE SAUX, Gilles
F-75010 Paris (FR)**

(74) Mandataire: **Hirsch & Associés
58, avenue Marceau
75008 Paris (FR)**

(56) Documents cités:
**WO-A-99/01791        FR-A- 2 220 803
FR-A- 2 620 927        FR-A- 2 663 528**

# EP 1 272 892 B1

**Description**

L'invention concerne les lentilles ophtalmiques, et plus précisément, le montage des lentilles ophtalmiques dans les montures de lunettes. Le montage de lentilles ophtalmiques dans une monture, qui est généralement réalisé par l'opticien, requiert d'autant plus de soin que les lentilles sont complexes et que la puissance de la lentille est importante. Le montage consiste d'abord à positionner la lentille par rapport à la monture, puis à usiner la lentille pour la fixer dans la monture - ou pour fixer la monture sur la lentille.

Dans le cas le plus simple de lentilles à symétrie de révolution présentant un axe optique, le montage de lentilles ophtalmiques commence par une étape d'adaptation de la monture. Au cours de cette étape, l'opticien repère la position des pupilles du porteur, dans le référentiel de la monture, lorsque le porteur regarde à l'infini tête droite. Autrement dit, l'opticien détermine l'intersection du regard de chaque oeil du porteur et du plan de la lentille correspondante dans la monture, lorsque le porteur regarde à l'infini tête droite. Pour cela, l'opticien demande à son client de porter la monture de la lunette, et mesure l'écart pupillaire ou le demi-écart pupillaire et la hauteur de la pupille du sujet dans la monture.

Lorsque l'opticien a repéré la position dans la monture des deux points d'intersection, il réalise le montage des lentilles en faisant coïncider l'axe optique des verres avec les points ainsi déterminés. Le centre optique peut être repéré par l'opticien au moyen d'un frontofocomètre, à moins qu'il ne soit matérialisé sur la lentille. L'opticien procède au détourage ou débordage des lentilles; cette opération permet d'enlever sur les bords de la lentille la matière en excès, pour que la lentille présente une forme adaptée à la monture. Il peut aussi être nécessaire de donner au bord de la lentille une forme adaptée à la monture. Pour plus d'informations sur le débordage des verres à la forme de la monture on pourra se référer à US-A-4 945 684.

Divers dispositifs ont été mis au point pour faciliter la mesure des paramètres nécessaires au montage des verres. EP-A-0 115 723 décrit un dispositif de mesure de paramètres oculaires. La position de la pupille est déterminée en faisant coïncider le reflet cornéen, crée par une source lumineuse, avec un réticule réglable. Le réticule est généré au moyen d'une matrice à cristaux liquides. Dans un premier temps, la mesure de l'écart pupillaire est effectuée sans monture, à l'aide d'un réticule vertical. Dans un second temps, le sujet porte la monture choisie. Le dispositif permet de mesurer la hauteur de la pupille dans la monture au moyen d'un réticule horizontal. Dans ce cas, un trait horizontal permet de visualiser le bord inférieur de la monture.

L'inconvénient de ce système réside dans l'imprécision liée au positionnement de l'appareil par rapport au sujet. Qui plus est, un tel dispositif ne permet pas de mesurer simultanément les différents paramètres ce qui augmente l'imprécision sur les mesures.

FR-A-1 315 937 décrit un appareil permettant d'assurer la prise de vue, d'une partie du visage, du patient équipé de sa monture de lunettes. Cet appareil est muni d'un capteur photosensible à émulsion. La photographie obtenue permet de déterminer les divers paramètres nécessaires à l'adaptation des verres dans la monture. Le dispositif est conçu de façon à réaliser une photographie avec un grandissement de 1. Pour que le grandissement soit effectivement de 1, le sujet doit se trouver à une distance donnée de l'appareil. La précision des mesures sera conditionnée d'une part, par la position du sujet par rapport à l'appareil et d'autre part, par l'exploitation du cliché qui ne donne pas directement les quantités recherchées.

Afin de s'affranchir de la contrainte liée à la distance porteur-appareil, FR-A-2 772 936 décrit un procédé d'étalonnage de l'image acquise d'un sujet équipé d'une monture de lunettes. Le procédé permet de déterminer le facteur d'échelle de l'appareil utilisé. Il peut s'agir tout aussi bien, d'un appareil dont la de prise de vue est réalisée au moyen d'un appareil photographique ou au moyen d'une caméra vidéo. Dans tous les cas, afin de déterminer les paramètres oculaires du sujet, à partir de la prise de vue, il est nécessaire de connaître le facteur d'échelle de l'appareil.

Une armature est rapportée à la monture du sujet. Cette armature présente une zone de référence de caractéristiques dimensionnelles déterminées. La comparaison entre les dimensions réelles de cette zone de référence et celles lues sur l'image permet de déterminer le facteur d'échelle.

WO-A-93/21819 propose un autre type de dispositif qui permet de mesurer, en plus de l'écart pupillaire et la hauteur de la pupille dans la monture, un autre paramètre, tel que par exemple, la distance verre-oeil ou l'angle pantoscopique. Ce type d'appareil a l'avantage de prendre en compte d'autres paramètres que ceux couramment utilisés mais ne résout pas le problème du positionnement précis de la tête du porteur dans le référentiel de l'appareil. Le positionnement de la tête du sujet dans le référentiel de l'appareil est une source importante d'erreurs. En effet, si le sujet incline légèrement la tête en avant ou s'il tourne légèrement la tête, la détermination des positions des pupilles, même réalisée avec précision ne donnera pas la bonne référence pour le montage des verres.

Le montage de lentilles plus complexes - lentilles progressives, lentilles pour astigmates, ou plus généralement toutes lentilles ne présentant pas de symétrie de révolution et donc pas d'axe optique - s'effectue sensiblement de la même façon. La différence est que le positionnement de la lentille par rapport à la monture s'effectue à l'aide de points de repère qui sont matérialisés sur la lentille par des micro-gravures ou par tout autre moyen; on peut aussi utiliser pour le montage des points qui ne sont pas matérialisés sur la lentille, et dont la position est calculée par l'opticien.

A titre d'exemple, le montage de lentilles ophtalmiques progressives peut s'effectuer comme expliqué maintenant. Les lentilles ophtalmiques progressives sont prescrites à des porteurs presbytes, et présentent une puissance qui est fonction de la position sur le verre. De telles lentilles sont bien connues dans l'état de la technique, et l'on pourra notamment consulter FR-A-2 769 998, FR-A-2 769 999 et FR-A-2 770 000 pour plus de détails sur leurs caractéristiques. Ces lentilles présentent généralement un point appelé croix de montage, matérialisé sur leur face avant, qui est utilisé par les opticiens pour le montage. Dans une monture donnée, le regard du porteur lorsqu'il regarde à l'infini tête droite doit passer par la croix de montage. Pour les lentilles de la demanderesse, la croix de montage est située quatre millimètres au-dessus du centre géométrique de la lentille.

Les lentilles progressives peuvent aussi présenter des micro-gravures, sous forme de deux cercles. Le milieu du segment défini par les deux cercles - le milieu des micro-gravures - se trouve à une distance déterminée par rapport à la croix de montage. Dans les lentilles progressives de la demanderesse, le milieu des micro-gravures se trouve 4 mm en dessous de la croix de montage.

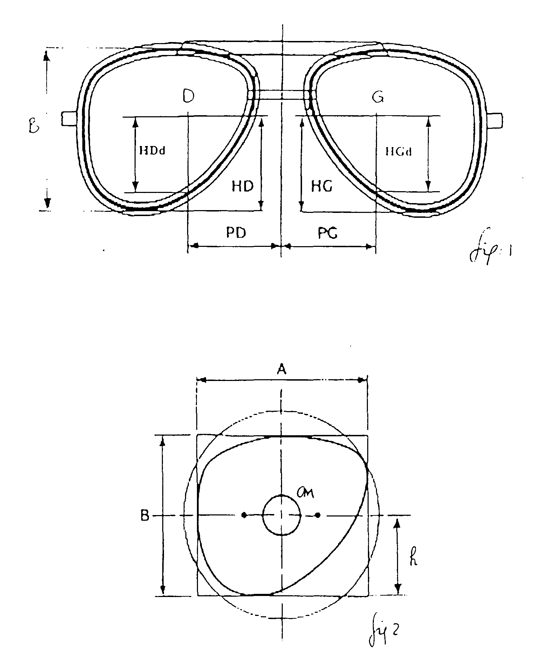

Le procédé préconisé actuellement par la demanderesse pour le montage des lentilles progressives est le suivant. Une lentille prescrite à un porteur est définie par la puissance nécessaire au porteur en vision de loin, éventuellement la valeur de l'astigmatisme à corriger et la valeur de l'addition ou de la puissance nécessaire en vision de près. On appelle base la sphère moyenne de la lentille en un point appelé point de référence pour la vision de loin. On appelle addition la différence de sphère moyenne entre un point de référence pour la vision de près et ce point de référence pour la vision de loin. Le porteur choisit une monture. L'opticien procède à la mesure des paramètres physiologiques du porteur, pour la monture, comme représenté sur la figure 1. Cette figure montre une représentation d'une monture et de la position des pupilles droite et gauche du porteur dans la monture, qui sont respectivement référencées D et G. On a représenté sur la figure en traits gras pour la monture le contour de la lentille, et en traits fins les limites intérieure et extérieure de la monture. On appelle calibre de la monture un élément en plastique, de forme plane, dont le contour correspond au fond de drageoir de la monture. Le calibre est donc la forme extérieure que la lentille une fois détourée doit présenter pour un montage dans la monture. On appellera par la suite hauteur totale du calibre, (B), la hauteur du calibre déterminée dans le système Boxing, c'est-à-dire suivant la norme ISO8624 sur les systèmes de mesure des montures de lunettes. Cette hauteur correspond à la hauteur d'un rectangle dans lequel s'inscrit la lentille une fois détourée. On appelle écart pupillaire la distance entre les deux pupilles de l'utilisateur. Pour le montage de lentilles progressives, un opticien mesure le demi-écart pupillaire droit et le demi-écart pupillaire gauche, qui sont référencés PD et PG. Le demi-écart gauche (respectivement droit) est la distance entre l'axe de symétrie vertical de la monture et le centre de la pupille gauche (respectivement droite). On appelle hauteur droite (respectivement hauteur gauche) la distance verticale entre la pupille droite (respectivement gauche) et le point le plus bas de la demi-monture droite (respectivement hauteur gauche). Ces quantités sont notées HD et HG sur la figure. Pour le montage de verres progressifs, l'opticien mesure ensuite les hauteurs référencées HDd et HGd sur la figure. Ces hauteurs droite et gauche de référence sont respectivement les distances entre la pupille droite ou gauche et l'intersection droite ou gauche, entre une droite verticale passant par la pupille et la monture dans sa partie inférieure. Les mesures d'écart pupillaire et de hauteur de la pupille par rapport à la monture sont effectuées pour une position donnée du porteur, à savoir pour le porteur regardant à l'infini tête droite; on peut utiliser à cette fin les dispositifs de l'état de la technique mentionnés plus haut.

Les caractéristiques d'une monture donnée peuvent être mesurées sur la monture, à l'aide d'un appareil connu en soi. A titre d'exemple, US-A-5 333 412 décrit un dispositif qui permet de mesurer, en 3 dimensions, la forme du fond de drageoir de la monture. La forme ainsi déterminée permet ensuite de calculer la hauteur B. Les caractéristiques d'une monture peuvent aussi être données directement par le fabricant en fonction du modèle choisi par le porteur.

A partir des donnéesainsi définies, chaque lentille est détourée de telle sorte que la croix de montage se trouve dans la monture en face de la pupille de l'oeil correspondant, lorsque le porteur regarde à l'infini tête droite. De la sorte, lorsque le porteur de la monture regarde à l'infini tête droite, son regard traverse la lentille à la croix de montage. Il est bien entendu possible, si la croix de montage n'est pas matérialisée sur la lentille, d'utiliser pour le positionnement des lentilles le milieu des micro-gravures, après correction par la distance entre ce milieu et la croix de montage.

Ce procédé de montage des lentilles progressives donne satisfaction. Il présente toutefois l'inconvénient de dépendre de la capacité de l'opticien à effectuer avec une bonne précision les mesures des demi-écarts pupillaires et des hauteurs par rapport à la monture. La mesure des demi-écarts pupillaires présente généralement une précision meilleure que la mesure des hauteurs par rapport à la monture.

Les solutions proposées dans l'état de la technique pour résoudre les problèmes de précision de mesure par les opticiens consistent à proposer des appareils de mesure plus complexes pour tenter de réduire l'erreur sur la mesure, comme les appareils de l'état de la technique mentionnés plus haut.

L'article « Ophthalmic lenses and dispensing Part one-Lens centration », Mo Jalie, October 20, 1995, Optician No 5524 vol 210, insiste sur l'importance de réaliser un centrage correct des lentilles destinées au porteur. Ce qui implique de réaliser un montage correct des lentilles dans la monture choisie par le porteur. Cet article décrit diverses méthodes utilisées pour le centrage horizontal et vertical.

Même si des appareils sont proposés aux opticiens pour faciliter la mesure de l'écart pupillaire et de la hauteur de la pupille dans la monture, le positionnement de la tête du porteur dans le référentiel de l'appareil reste une source importante d'erreur. Un autre problème est que la précision des mesures dépend des individus qui réalisent le montage, et n'est donc pas nécessairement reproductible.

L'invention a pour objet une solution aux problèmes que pose le montage des lentilles ophtalmiques. Elle permet d'éviter que l'erreur sur les mesures de hauteur par rapport à la monture ne conduise à un mauvais positionnement de la lentille par rapport à la pupille du porteur, pour une monture donnée. Elle s'applique au montage des lentilles de tous types.

Plus précisément, l'invention propose un procédé de montage dans une monture d'une lentille ophtalmique prescrite à un porteur, comprenant les étapes de

- mesure de la position horizontale de la pupille du porteur ;
- détermination de la hauteur totale (B) du calibre de la monture,
- positionnement de la lentille dans la monture en fonction de la position horizontale mesurée et de la hauteur totale (B) ; et
- détourage de la lentille et montage de la lentille dans la monture;

L'étape de positionnement comprend le positionnement, à une distance h verticalement au-dessus du bord inférieur du calibre de la monture, du point de la lentille par lequel doit passer le regard du porteur en vision à l'infini tête droite, avec

$$h = Int(0,5.B + 5,5) \quad pour\ 31 \leq B \leq 35 \tag{1}$$

$$h = Int(0,5.B + 4,5) \quad pour\ 36 \leq B \leq 50 \tag{2}$$

où B est la hauteur totale du calibre de la monture, et Int la fonction partie entière.

Cette solution s'applique notamment à des lentilles progressives, mais aussi à des lentilles non-progressives.

Il est avantageux que le point de la lentille par lequel doit passer le regard du porteur en vision à l'infini tête droite soit matérialisé sur la surface de la lentille par une croix de montage.

Dans un autre mode de réalisation, la lentille est une lentille progressive sur laquelle sont matérialisées des micro-gravures, et l'étape de positionnement comprend le positionnement, à une distance h verticalement au-dessus du bord inférieur du calibre de la monture, du milieu des micro-gravures, avec

$$h = Int(0,5.B + 5,5 - d) \quad pour\ 31 \leq B \leq 35 \tag{3}$$

$$h = Int(0,5.B + 4,5 - d) \quad pour\ 36 \leq B \leq 50 \tag{4}$$

où B est la hauteur totale du calibre de la monture, et Int la fonction partie entière, et d la distance verticale sur la lentille entre le milieu des micro-gravures et le point de la lentille par lequel doit passer le regard du porteur en vision à l'infini tête droite.

Dans un cas comme dans l'autre, l'étape de mesure de la position horizontale de la pupille du porteur peut comprendre la mesure du demi-écart pupillaire du porteur.

La détermination de la hauteur totale (B) du calibre de la monture comprend de préférence la mesure de la forme de la monture au fond du drageoir.

L'invention propose encore des lunettes avec une monture et des lentilles, obtenues selon un tel procédé.

D'autres caractéristiques et avantages de l'invention apparaîtront à la lecture de la description qui suit de modes de réalisation de l'invention, donnée à titre d'exemple et en référence aux dessins annexés qui montrent:

- figure 1 une représentation des paramètres physiologiques d'un porteur pour une monture donnée;
- figure 2 une représentation d'un contour d'une lentille, avant et après débordage;

L'invention propose, à l'inverse des solutions de l'art antérieur, de procéder au montage des lentilles ophtalmiques dans une monture non pas en mesurant l'écart pupillaire ou le demi-écart pupillaire et la hauteur de la pupille par rapport à la lentille, mais en mesurant uniquement le demi-écart pupillaire et en utilisant la hauteur totale du calibre de la monture. Elle repose, à partir de l'analyse statistique d'un grand nombre de données, sur la constatation qu'il existe pour les montures et les porteurs une relation entre la hauteur totale du calibre de la monture et la hauteur pupillaire. Ainsi, le montage d'une lentille dans une monture peut s'effectuer en ne mesurant sur le patient que le demi-écart pupillaire ; la connaissance de la hauteur totale du calibre de la monture permet alors de calculer la position de la lentille dans la monture.

Le procédé de l'invention permet de réaliser le montage d'une lentille ophtalmique, pour une forme de monture donnée, à partir de la seule mesure sur le patient de l'écart pupillaire. Cette mesure est moins sujette à erreurs que la mesure de la hauteur pupillaire sur une monture portée par le porteur. La hauteur du calibre de la monture est fournie par le constructeur de monture, ou peut être mesurée sur la monture sans le porteur; les sources d'erreur sont moindres.

Dans la suite l'invention est décrite dans l'exemple d'une lentille progressive pour l'oeil droit, présentant une croix de montage. Elle s'applique de la même façon à une lentille pour l'oeil gauche, ou à des lentilles qui ne sont pas progressives, ou encore à des lentilles ne présentant pas une croix de montage.

La figure 2 montre une représentation du contour d'une lentille ophtalmique, avant et après détourage. Sur la figure, le trait simple correspond au contour de la lentille avant détourage; de façon classique, la lentille peut être obtenue par moulage et présente une forme circulaire. Le trait gras correspond au contour du calibre de la monture, qui est aussi le contour de la lentille après détourage de la lentille. Ce détourage de la lentille permet le montage ultérieur de la lentille dans la monture.

On a représenté à la figure la largeur totale A du calibre de la monture et la hauteur totale B de ce calibre, et le rectangle dans lequel s'inscrit la lentille détourée. Comme expliqué plus haut, le positionnement de la lentille dans la monture consiste à déterminer la position souhaitée dans la monture de la lentille, à l'aide de points remarquables de la lentille. On peut utiliser comme expliqué plus haut la croix de montage de la lentille, le milieu de micro-gravures matérialisées sur la surface de la lentille, ou encore le centre optique dans le cas d'une lentille unifocale. Sur la figure 2, la croix de montage se trouve au centre du cercle marqué CM

Pour une lentille ne présentant pas une symétrie de rotation, il faut aussi procéder à un positionnement angulaire de la lentille dans la monture. Ce positionnement angulaire dépend des spécifications du fabricant, et notamment pour des lentilles progressives de l'allure de la méridienne principale de progression; dans les lentilles progressives de la demanderesse, la méridienne principale de progression est inclinée du côté temporal vers le côté nasal, et la lentille doit être montée de telle sorte que les micro-gravures soient horizontales. Il a aussi été proposé dans l'état de la technique des lentilles présentant une méridienne principale de progression droite, qui sont inclinées vers le côté nasal au montage.

La position horizontale de la croix de montage dans la lentille est déterminée par la mesure du demi-écart pupillaire; cette mesure peut s'effectuer de façon connue en soi, sur le porteur, avec ou sans la monture. La croix de montage est positionnée dans la monture de telle sorte que la croix de montage soit sur une même verticale que la pupille du porteur, dans la position de référence choisie par l'opticien pour la mesure. Dans le montage préconisé par la demanderesse, cette position de référence est la position tête droite, le porteur regardant à l'infini devant lui. La mesure du demi-écart pupillaire du porteur fournit une mesure de la position horizontale de la pupille du porteur par rapport à la monture.

La position verticale du point de référence situé sur la lentille et utilisé pour le montage - qui est la croix de montage dans l'exemple de lentille progressive considéré ici - est selon l'invention déterminée à partir de la hauteur totale du calibre de la lentille. On peut pour déterminer la hauteur de la croix de montage utiliser les relations suivantes :

$$h = \mathrm{Int}(0{,}5.B + 5{,}5) \quad \text{pour } 31 \leq B \leq 35 \tag{1}$$

$$h = \mathrm{Int}(0{,}5.B + 4{,}5) \quad \text{pour } 36 \leq B \leq 50 \tag{2}$$

où

- h est la hauteur de la croix de montage exprimée en millimètres, telle qu'elle est représentée sur la figure 2, c'est-à-dire la distance sur une verticale entre la croix de montage et le bord inférieur du calibre de la monture;
- B la hauteur totale du calibre de la monture, exprimée en millimètres, telle qu'elle est représentée sur la figure 2; et
- Int est la fonction partie entière, qui à un réel associe le nombre entier qui lui est immédiatement inférieur ou égal.

Les relations (1) et (2) permettent de calculer la hauteur de montage de la lentille par rapport à la monture, sans mesure sur le porteur. Autrement dit, ces relations permettent de positionner verticalement la lentille, grâce à la croix de montage, sans mesure de la position verticale de la pupille sur le porteur.

L'invention permet ainsi de déterminer la position verticale et horizontale de la croix de montage par rapport à la monture, et donc de positionner la lentille par rapport à la monture. En fonction de la position de la croix de montage dans la monture, il est possible de procéder comme dans l'art antérieur à un détourage de la lentille, pour permettre ensuite son montage dans la monture.

L'invention permet d'éviter les erreurs de mesure de hauteur de la pupille par rapport à la monture, dans la position de référence du porteur. Il suffit selon l'invention de mesurer le demi-écart pupillaire sur le porteur. Le seul fait de diminuer le nombre de mesures à réaliser pour le montage des lentilles permet d'améliorer la précision de ce montage.

L'invention assure donc un positionnement de la lentille, qui est au moins sensiblement équivalent à celui obtenu selon le procédé de l'état de la technique et qui est plus simple pour l'opticien, dans la mesure ou une seule prise de mesure est nécessaire au lieu de deux antérieurement.

L'invention s'applique au cas de lentilles progressives présentant une croix de montage, comme expliqué dans l'exemple. Dans le cas de lentilles unifocales, les mêmes formules peuvent être utilisées pour positionner le centre optique de la lentille par rapport à la monture.

Par ailleurs, lorsqu'il n'y a pas sur la surface de la lentille, un traçage pour repérer la croix de montage, le point de référence pour une lentille progressive peut alors être le milieu des micro-gravures, dans ce cas la hauteur de montage est donnée par les relations suivantes :

$$h = \text{Int}(0{,}5.B + 5{,}5 - d) \qquad \text{pour } 31 \leq B \leq 35 \qquad\qquad (3)$$

$$h = \text{Int}(0{,}5.B + 4{,}5 - d) \qquad \text{pour } 36 \leq B \leq 50 \qquad\qquad (4)$$

avec les mêmes notations que plus haut, d étant un paramètre correctif égal à la distance mesurée verticalement sur la lentille entre le milieu des micro-gravures et la position de l'oeil du porteur en vison à l'infini tête droite, préconisée par le fabricant.

L'invention s'applique donc quel que soit le point de repère utilisé pour le positionnement de la lentille - croix de montage, centre optique, ou autre.

Bien entendu, la présente invention n'est pas limitée aux exemples et modes de réalisation décrits et représentés, mais elle est susceptible de nombreuses variantes accessibles à l'homme de l'art. On pourrait ainsi utiliser une formule différente de celles proposées plus haut, pour des hauteurs de calibres inférieures ou égales à 30 mm ou supérieures ou égales à 51 mm.

On pourra tout aussi bien appliquer le principe au cas des montures dites « percées », c'est-à-dire dans lesquelles les branches et le pontet sont vissées sur le verre, sans que la monture n'entoure chacun des verres. La hauteur B est dans ce cas la hauteur de la forme de la lentille choisie par le porteur.

## Revendications

1. Procédé de montage dans une monture d'une lentille ophtalmique prescrite à un porteur, **caractérisé par** les étapes de

    - mesure de la position horizontale de la pupille du porteur ;
    - détermination de la hauteur totale (B) du calibre de la monture,
    - positionnement de la lentille dans la monture en fonction de la position horizontale mesurée et de la hauteur totale (B), et
    - détourage de la lentille et montage de la lentille dans la monture,

    l'étape de positionnement comprenant le positionnement, à une distance h verticalement au-dessus du bord inférieur du calibre de la monture, du point de la lentille par lequel doit passer le regard du porteur en vision à l'infini tête droite, avec

$$h = \text{Int}(0{,}5.B + 5{,}5) \qquad \text{pour } 31 \leq B \leq 35 \qquad\qquad (1)$$

$$h = \text{Int}(0{,}5.B + 4{,}5) \qquad \text{pour } 36 \leq B \leq 50 \qquad\qquad (2)$$

où B est la hauteur totale du calibre de la monture, et Int la fonction partie entière;.

2. Le procédé de la revendication 1, **caractérisé en ce que** le point de la lentille par lequel doit passer le regard du porteur en vision à l'infini tête droite est matérialisé sur la surface de la lentille par une croix de montage.

3. Le procédé de la revendication 1 ou 2, **caractérisé en ce que** la lentille est une lentille progressive.

4. Le procédé de la revendication 1, 2 ou 3, **caractérisé en ce que** l'étape de mesure de la position horizontale de la pupille du porteur comprend la mesure du demi-écart pupillaire du porteur.

5. Le procédé de l'une des revendications 1 à 4, **caractérisé en ce que** la détermination de la hauteur totale (B) du calibre de la monture comprend la mesure de la forme de la monture au fond du drageoir.

6. Procédé de montage dans une monture d'une lentille ophtalmique progressive prescrite à un porteur, sur laquelle sont matérialisées des micro-gravures, le procédé étant **caractérisé par** les étapes de

   - mesure de la position horizontale de la pupille du porteur ;
   - détermination de la hauteur totale (B) du calibre de la monture,
   - positionnement de la lentille dans la monture en fonction de la position horizontale mesurée et de la hauteur totale (B), et
   - détourage de la lentille et montage de la lentille dans la monture,

   l'étape de positionnement comprenant le positionnement, à une distance h verticalement au-dessus du bord inférieur du calibre de la monture, du milieu des micro-gravures, avec

$$h = \text{Int}(0{,}5.B + 5{,}5 - d) \text{ pour } 31 \leq B \leq 35 \tag{3}$$

$$h = \text{Int}(0{,}5.B + 4{,}5 - d) \text{ pour } 36 \leq B \leq 50 \tag{4}$$

   où B est la hauteur totale du calibre de la monture, et Int la fonction partie entière, et d la distance verticale sur la lentille entre le milieu des micro-gravures et le point de la lentille par lequel doit passer le regard du porteur en vision à l'infini tête droite.

7. Le procédé de la revendication 6, **caractérisé en ce que** l'étape de mesure de la position horizontale de la pupille du porteur comprend la mesure du demi-écart pupillaire du porteur.

8. Le procédé de la revendication 6 ou 7, **caractérisé en ce que** la détermination de la hauteur totale (B) du calibre de la monture comprend la mesure de la forme de la monture au fond du drageoir.

**Claims**

1. A method for fitting, in a frame, an ophthalmic lens prescribed for a wearer, **characterized by** the steps of :

   - measuring the horizontal position of the wearer's pupil ;
   - determining the total height (B) of the pattern of the frame ;
   - positioning the lens in the frame according to the horizontal position measured and according to the total height (B) ; and
   - trimming the lens and fitting the lens in the frame,

   the positioning step involving positioning, at a distance h vertically above the lower edge of the pattern of the frame, the point of the lens through which the wearer's gaze has to pass when he has his head up and is looking at infinity, with

$$h = \text{Int} (0.5\ B + 5.5) \quad \text{for } 31 \leq B \leq 35 \tag{1}$$

$$h = \text{Int} \, (0.5 \, B + 4.5) \quad \text{for } 36 \leq B \leq 50 \qquad (2)$$

where B is the total height of the pattern of the frame, and Int is the function for the integer part.

**2.** The method of claim 1, **characterized in that** the point of the lens through which the wearer's gaze has to pass when he has his head up and is looking at infinity is embodied on the surface of the lens by a fitting cross.

**3.** The method of claim 1 or 2, **characterized in that** the lens is a progressive lens.

**4.** The method of claim 1, 2 or 3, **characterized in that** the step of measuring the horizontal position of the wearer's pupil involves measuring the wearer's pupillary half-distance.

**5.** The method of one of claims 1 to 4, **characterized in that** determining the total height (B) of the pattern of the frame involves measuring the shape of the frame at the bottom of the bezel.

**6.** A method for fitting, in a frame, a progressive ophthalmic lens prescribed for a wearer, on which microetchings are embodied, the method being **characterized by** the steps of

- measuring the horizontal position of the wearer's pupil ;
- determining the total height (B) of the pattern of the frame ;
- positioning the lens in the frame according to the horizontal position measured and according to the total height (B) ; and
- trimming the lens and fitting the lens in the frame,

the positioning step involving positioning, at a distance h vertically above the lower edge of the pattern of the frame, the middle of the microetchings, with

$$h = \text{Int} \, (0.5 \, B + 5.5 - d) \text{ for } 31 \leq B \leq 35 \qquad (3)$$

$$h = \text{Int} \, (0.5 \, B + 4.5 - d) \text{ for } 36 \leq B \leq 50 \qquad (4)$$

where B is the total height of the pattern of the frame, and Int is the function for the integer part and d is the vertical distance on the lens between the middle of the microetchings and the point of the lens through which the wearer's gaze has to pass when he has his head up and is looking at infinity.

**7.** The method of claim 6, **characterized in that** the step of measuring the horizontal position of the wearer's pupil involves measuring the wearer's pupillary half-distance.

**8.** The method of claim 6 or 7, **characterized in that** determining the total height (B) of the pattern of the frame involves measuring the shape of the frame at the bottom of the bezel.

**Patentansprüche**

**1.** Verfahren zur Montage einer einem Träger verordneten ophtalmischen Linse an einem Gestell, **gekennzeichnet durch** die Schritte:

- Messen der Horizontalposition der Pupille des Trägers;
- Bestimmen der Gesamthöhe (B) des Durchmessers des Gestells,
- Positionieren der Linse an dem Gestell in Abhängigkeit der gemessenen Horizontalposition und der Gesamthöhe (B), und
- Beschneiden der Linse und Montieren der Linse an dem Gestell, wobei der Schritt des Positionierens das Positionieren des Punktes der Linse, **durch** den der Blick des Trägers bei Sicht ins Unendliche mit geradem Kopf verläuft, in einem Abstand h, vertikal oberhalb des unteren Randes des Durchmessers des Gestells,

umfasst, mit

$$h = \text{Int}(0,5\ B + 5,5) \qquad \text{für } 31 \le B \le 35 \qquad\qquad (1)$$

$$h = \text{Int}(0,5\ B + 4,5) \qquad \text{für } 36 \le B \le 50 \qquad\qquad (2)$$

wobei B die Gesamthöhe (B) des Durchmessers des Gestells und Int die Ganzzahlfunktion ist.

2.  Verfahren gemäß Anspruch 1 **dadurch gekennzeichnet, dass** der Punkt der Linse, durch den der Blick des Trägers bei Sicht ins Unendliche mit geradem Kopf verläuft auf der Fläche der Linse mit einem Montagekreuz dargestellt ist.

3.  Verfahren gemäß Anspruch 1 oder 2 **dadurch gekennzeichnet, dass** die Linse eine Gleitschichtlinse ist.

4.  Verfahren gemäß Anspruch 1, 2 oder 3 **dadurch gekennzeichnet, dass** der Schritt des Messens der Horizontalposition der Pupille des Trägers das Messen des halben Pupillenabstandes des Trägers umfasst.

5.  Verfahren gemäß einem der Ansprüche 1 bis 4 **dadurch gekennzeichnet, dass** das Bestimmen der Gesamthöhe (B) des Durchmessers des Gestells das Messen der Form des Gestells an der Basis der Aufnahme umfasst.

6.  Verfahren zur Montage einer einem Träger verordneten ophtalmischen Gleitschichtlinse an einem Gestell, an der Mikrogravuren ausgeführt sind, wobei das Verfahren **gekennzeichnet ist durch** die Schritte:

    - Messen der Horizontalposition der Pupille des Trägers;
    - Bestimmen der Gesamthöhe (B) des Durchmessers des Gestells,
    - Positionieren der Linse an dem Gestell in Abhängigkeit der gemessenen Horizontalposition und der Gesamthöhe (B), und
    - Beschneiden der Linse und Montieren der Linse an dem Gestell, wobei der Schritt des Positionierens das Positionieren der Mitte der Mikrogravuren in einem Abstand h, vertikal oberhalb des unteren Randes des Durchmessers des Gestells, umfasst, mit

$$h = \text{Int}(0,5\ B + 5,5 - d) \qquad \text{für } 31 \le B \le 35 \qquad\qquad (3)$$

$$h = \text{Int}(0,5\ B + 4,5 - d) \qquad \text{für } 36 \le B \le 50 \qquad\qquad (4)$$

wobei B die Gesamthöhe (B) des Durchmessers des Gestells, Int die Ganzzahlfunktion und d der vertikale Abstand auf der Linse zwischen der Mitte der Mikrogravuren und dem Punkt der Linse ist, **durch** den der Blick des Trägers bei Sicht ins Unendliche mit geradem Kopf verläuft

7.  Verfahren gemäß Anspruch 6 **dadurch gekennzeichnet, dass** der Schritt des Messens der Horizontalposition der Pupille des Trägers das Messen des halben Pupillenabstandes des Trägers umfasst.

8.  Verfahren gemäß Anspruch 6 oder 7 **dadurch gekennzeichnet, dass** das Bestimmen der Gesamthöhe (B) des Durchmessers des Gestells das Messen der Form des Gestells an der Basis der Aufnahme umfasst.

fig. 1

fig 2